Europäisches Patentamt

European Patent Office

Office européen des brevets

(19)

(11) Publication number: **0 040 485**
**B1**

# EUROPEAN PATENT SPECIFICATION

(12)

(45) Date of publication of patent specification: **15.08.84**

(51) Int. Cl.³: **F 16 L  21/06, B 60 T  17/04**

(21) Application number: **81301935.3**

(22) Date of filing: **01.05.81**

(54) **Tube fittings, couplings for tubing and fluid connector joints.**

(30) Priority: **19.05.80 US 150761**

(43) Date of publication of application:
**25.11.81 Bulletin 81/47**

(45) Publication of the grant of the patent:
**15.08.84 Bulletin 84/33**

(84) Designated Contracting States:
**DE FR**

(56) References cited:
**DE - A - 2 352 885**
**DE - A - 2 643 430**
**DE - A - 2 953 463**
**FR - A - 2 271 489**
**GB - A - 1 528 749**
**GB - A - 2 022 748**
**US - A - 4 062 572**
**US - A - 4 188 051**

(73) Proprietor: **PARKER HANNIFIN CORPORATION**
**17325 Euclid Avenue**
**Cleveland Ohio 44112 (US)**

(72) Inventor: **Burge, Donald G.**
**10320 Douglas Avenue Route 1**
**Plainwell, Michigan 49080 (US)**

(74) Representative: **Thomas, Roger Tamlyn et al,**
**D. Young & Co. 10 Staple Inn**
**London WC1V 7RD (GB)**

## Description

The invention relates to tube connectors.

Push-in tube connectors are well-known in the art wherein a preassembled fitting is employed into which the tube end is inserted with no further operation required for making the joint tight and leakproof. Such a connector finds particular use in assembly line operations, for example where tubing is being installed on truck air brake systems.

Prior art devices of this type are exemplified for example in U.S. Patent No. 4,188,051 wherein the general combination of components comprising a body and nut member, an elastomeric sealing ring and a collet type gripping element are employed to provide a fluid-tight seal upon insertion of tubing and a firm grip thereon to prevent withdrawal of same. Disconnection of such type coupling is made by unthreading the nut from the body member whereby the tubing and the internal components of the coupling can be withdrawn.

Another example of a connector employing similar components is shown in U.S. Patent No. 4,062,572, this however being not of the strict push-in type, but rather requiring a final tightening of an exterior nut once the tubing is in position within the fitting to trap the gripper ring and establish a preferred compression of the elastomeric sealing member. Disconnection of this type of connector is also achieved by unthreading the nut.

This prior art exemplifies difficulties in connectors of these types. In the push-in variety sufficient axial play must be afforded to the internal components of the connector since relative movement must occur between the conical surfaces of the gripper member and its conical seating surface to allow for radial expansion and contraction thereof. With the components loosely assembled in such manner, there occurs the possibility of cocking of the gripper sleeve, for example, unless means are provided to maintain alignment. Further, such axial end play may affect the sealing characteristics of the elastomeric seal as pulsations are encountered in fluidpower systems causing movement of the components in the connector and further the possibility of weakening of the wall of the tubing can occur due to the play allowed. It is noted in various of these prior art embodiments that backup or secondary seals are provided between body and nut members to ensure fluid-tight connections.

While perhaps a more reliable seal can be effected in the type of connector disclosed in U.S. Patent No. 4,062,572 in that a controlled compression can be made to occur in the elastomeric seal and end play reduced or eliminated, such a connector is difficult to use in requiring the manual tightening of the nut portion thereon after the tubing has been inserted in the connector.

According to the present invention there is provided a tube connector comprising a body having a bore therein and a tube support forming an annular space for receipt of a tube, the bore having an entrance at one end of the body and terminating at a shoulder,

a nut having a bore therein for receipt of a tube, the nut having an inwardly extending tubular portion terminating in an end ring of a diameter to fit within the bore in the body, means for releasably interengaging the nut and the body and allowing their movement into a position wherein the end ring of the nut is spaced from the shoulder in the body, an elastomeric ring seal located in the body, the nut having an internal frusto-conical surface between the bore and the end ring and disposed in the annular space, a radially expandable and contractable sleeve-like gripping member having a frusto-conical outer surface in engagement with the frusto-conical internal surface of the nut and slidable relative thereto, the gripping member having a gripping means on the inner surface thereof for engagement with the outer surface of an inserted tube, characterised in that:—
the ring seal has a sealing portion disposed between the shoulder and the end ring and compressible therebetween to provide sealing engagement between the body and the nut, the ring seal also having an abutment portion thereon radially inwardly of said sealing portion, the gripper member having an abutment means at the axially inner end thereof which abuts with the ring seal abutment portion to limit inward movement of the gripper member and to urge it axially outwardly toward a tube gripping position, an O-ring seal is provided in the bore in the nut for sealing the outer surface of an inserted tube, and a tube engaging portion is provided on the ring seal and is compressible by an inserted tube to increase axial sealing pressure between the nut and the body.

Preferably a non-resilient seal is formed directly between the body and the nut and advantageously comprises a shoulder on the nut engageable by the body entrance in metal-to-metal sealing engagement thereby also to limit interengagement between the body and the nut.

The elastomeric ring type seal is contained within the body and provides a fluid seal between the body and the nut, being compressed a predetermined amount by the predetermined physical spacing of the portions of the nut and body member. The gripper member is preferably a split ring gripper and its conical outer surface cooperates with the conical inner surface of the nut to provide radial expansion and contraction and a grip upon the outer surface of the inserted tubing to prevent withdrawal. The abutment means of the gripper member is preferably designed to engage a ridge forming the abutment portion of the elastomeric seal to provide the plural functions of maintaining alignment of the gripper member with the conical surface to prevent cocking of same therein, effecting a stop for axial movement of the gripper member upon insertion of the tubing, and providing a bias upon the gripper member to urge same back toward the conical surface and into the radially contracted condition.

Preferably the tube engaging portion of the ring seal is an annular surface lying in a plane transverse to the longitudinal axis of the body and the nut.

Advantageously the body further includes a blind bore within the shoulder for receiving an inserted tube and the tube engaging portion of the ring seal is annular and positioned at the entrance of the blind bore circumferentially to engage the outer surface of an inserted tube.

Preferably the abutment portion of the ring seal is an axially extending ridge between the tube engaging portion and the first sealing portion of the ring seal, arranged to be compressed upon insertion of the tubing.

In all the embodiments of the invention hereinafter described the elastomeric seal is contracted by the inserted tubing and compressed a predetermined amount to enhance the seal between the body members and the bias upon the gripper member; in one embodiment the seal provides a radial surface for abutment by the end of the inserted tubing and in another embodiment provides an annular surface for sealing the outside of the inserted tubing between the end thereof and the location of the gripper member.

The invention is diagrammatically illustrated by way of example with reference to the accompanying drawings in which:—

Figure 1 is a longitudinal cross-section view of a preferred embodiment of tube conector according to the invention;

Figure 2 is a view of the connector of Figure 1 with tubing inserted;

Figure 3 is an enlarged partial section view of a ring seal portion of Figure 1;

Figures 4—5 are partial longitudinal cross-section views of further embodiments of tube connectors according to the invention; and

Figures 4A—5A are views of the connectors of Figures 4—5 with tubing inserted.

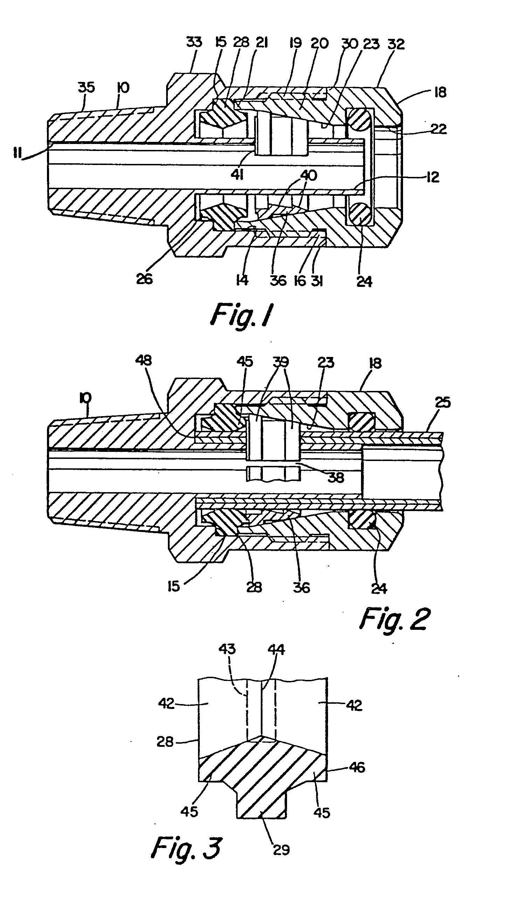

Referring initially to Figures 1—3, the tube connector shown comprises a body 10 having a flow passage 11 therein and an integral tube support 12, machined as a tubular member coextensive with the flow passage 11. The body 10 includes a main bore 14 having radial shoulder 15 at the inner end thereof and includes internal threads 16 over a portion of the surface forming the bore 14.

A nut 18 includes external threads 19 formed on a generally tubular portion 20 thereof extending within the body 10 and terminating in an axially extending end ring 21 of a diameter to fit within the bore. The nut 18 has an entrance bore 22 and a frustro-conical inner surface 23 in the tubular portion 20 thereof between the end ring 21 and the entrance bore 22. An O-ring seal 24 is disposed in the entrance bore 22 for sealing against the outside of inserted tubing 25.

The shoulder 15 extends radially inwardly a short distance and intersects with a recess bore 26. A ring seal 28 is disposed in the body 10, the ring seal 28 having a base portion 29 in engagement with the shoulder 15, the main bore 14 and the end ring 21 of the nut 18 and placed in compression by the end ring 21. The base portion 29 is generally rectangular in cross-sectional configuration and is compressed a predetermined amount upon threading of the nut 18 into the body 10, the predetermined position of the end ring 21 being determined by the metal-to-metal abutment of radial surfaces 30, 31 on the body 10 and the nut 18 respectively. The radial surface 30 is the annular end of the body 10 and the radial surface 31 is a shoulder on the nut 18 adjacent wrench engaging flats 32. Further wrench flats 33 are provided on the body 10 as are external pipe threads 35, for example, for engagement of the connector with external fluid devices.

The connector further includes a gripper 36 therein comprising a ring having an axial split 38 therein, a pair of axially spaced frusto-conical external surfaces 39 and a pair of annular ribs 40 on the inner surface thereof of ramp-like configuration having barbs thereon directed toward the inside of the connector. A still further annular ridge 41 is integral with and extends axially inwardly of the gripper 36, being slightly radially inwardly of the inner conical surface 39 and extending a short distance axially. The ring seal 28 further comprises a pair of inner conical surfaces 42 merging at an annular ridge or sealing surface 44, this being essentially a line contact surface in the uncoupled configuration of the fitting as depicted in Figure 1 but comprising a substantial sealing surface for the outside of the tubing 25, when compressed into sealing engagement thereby, as depicted in Figure 2 and as shown by the dashed lines 43 in Figure 3. The conical surfaces 42 of the ring seal 28 extend axially beyond the base portion 29 forming inner and outer projecting flanges or rings 45 terminating in a substantially radial abutment face 46. The abutment face 46 is located radially inwardly of the bore 14 and is of sufficient radial dimension as to be engaged by the annular ridge 41 of the gripper 36 as the gripper 36 is radially expanded and contracted upon movement relative to the inner surface of the nut 18.

Thus it may be seen that upon insertion of the tubing 25 into the connector, an initial guiding thereof occurs by means of the bore 22 of the nut 18 such that the tubing is guided onto the tube support 12. In further inward movement, the tubing 25 will engage the gripper 36 and slide it inwardly relative to the inner conical surface 23 of the nut 18 until engagement between the annular ridge 41 of the gripper 36 and the projecting flange 45 of the ring seal 28 occurs. Such engagement between the gripper 36 and the ring seal 28 maintains alignment of the gripper within the conical surface 23 and prevents cocking of same. Even though the gripper 36 is moved to an axial position within the nut 18 where it is free to be radially expanded, the dimensions of the gripper 36 are such that the inner ribs 40 thereof are of a smaller diameter than the outer diameter of the tubing 25 providing an interference fit and requiring a substantial amount of force radially to expand the gripper 36. Typically the body 10, the nut 18 and the gripper 36 are machined of brass, but it will be apparent that other materials could alternatively be used.

The projecting flange 45 of the ring seal 28 is compressed by the ridge 41 to create additional bias thus to provide a stop device for resisting axially inward movement of the gripper 36. In this way the end 48 of the inserted tubing 25 may act upon the ramp surface of the inner ribs 40 of the gripper 36, camming the gripper to a radially expanded condition. When the gripper 36 is sufficiently expanded, the inserted tubing 25 can continue its transit along the tube support 12 passing within the ring seal 28 and compressing the ring seal 28 by deforming the annular line contact 44 thereof until abutment occurs between the tubing end 48 and the end wall of the recess 26.

In compression of the elastomeric seal 28 by means of abutment with the gripper 36 and further compression afforded by means of the inserted tubing 25, the projecting flange 45 will bias the gripper 36 outwardly toward the inner conical surface 23 of the nut 18 to a position where the gripper 36 becomes radially contracted upon the tubing 25, this occurring to a great extent even while continued insertion force is applied to the tubing 25 in the inward direction, thereby setting the ribs 40 well into the surface of the tubing 25.

It will be clear then as seen in the coupled configuration of Figure 2, with the tubing 25 fully inserted within the connector, that the projecting flange 45 of the ring seal 28 is in engagement with the annular ridge 41 of the gripper 36, biasing the gripper into the conical surface 23 of the nut 18, and that no axial end play occurs between these components of the connector. Additional outward force upon the tubing 25 as by the development of fluid pressure within the flow passage 11 or external pull on the tubing 25, then further merely tends to move the gripper 36 into a more radially contracted condition in relation to the conical surface 23 of the nut 18, thereby further increasing the grip upon the tubing 25. It is apparent that the gripper 36 and the ring seal 28 may be sized in various ways to achieve different desired relationships of axial end play within the connector and that the tubing 25 tolerances and manufacturing tolerances of the components of the connector itself will have an influence on these spacings, but can be accommodated by proper design. It is desirable so to size the flange 45 of the ring seal 28 and the annular ridge 41 that the two remain in contact after the tubing 25 has been inserted in any position of the gripper 36 relative to the inner conical surface 23 of the nut 18. Spacing may be allowed, however, prior to insertion of the tubing 25, as seen in Figure 1, as desired.

It is noted as well that the tube support 12 is axially sized to extend fully through the ring seal 28, the gripper member 36 and sufficiently close to the O-ring 24 as to provide support for the tubing 25 in these locations. With respect to more flexible plastic tubing 25, for example, the tube support 12 substantially increases the sealing effect of the ring seal 28 and the gripping effectiveness of the gripper member 36, while a close fit within the bore 22 prevents undue flexing of the tubing 25 adjacent the nut 18.

Thus it may be seen that a primary fluid seal for the fluid joint is provided by the ring seal 28 in this embodiment on the outside of the tubing 25, and that a secondary seal to prevent leakage from internal pressure is provided by the O-ring 24, again outside of the tubing 25, this seal also acting as a primary seal to keep out dirt and moisture from the connector. A body seal is effected by the ring seal 29 between the body 10 and the nut 18 at the inner ring 21, while a backup metal-to-metal seal is provided at the radial surfaces 30, 31.

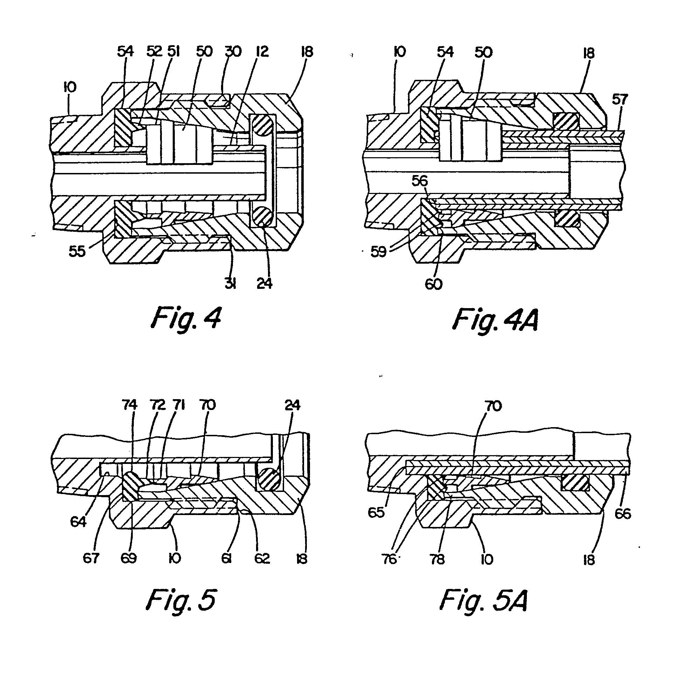

Two other embodiments of the invention are depicted in Figures 4 and 5 and with tubing inserted in Figures 4A and 5A in which the same reference numerals are used to identify the same or functionally similar parts. Thus, in Figures 4 and 4A a similar body 10 and nut 18 configuration are employed, the former having the tube support 12 and the latter bearing the O-ring 24 with establishment of a metal-to-metal seal between contacting surfaces at 30, 31. In this embodiment of the invention however, a similar gripper 50 includes a somewhat axially longer ridge 51 which abuts an axially extending flange 52 of a ring seal 54. A shoulder 55, forming the end wall of the bore in the body 10, extends fully to the tube support 12. The ring seal 54 is of generally rectangular cross-section and substantially fully occupies and is seated against the shoulder 55 being compressed again between the inner end of the nut 18 and the shoulder 55 to provide a body to nut seal. As seen in Figure 4A, the end 56 of inserted tubing 57 abuts a radial face of the ring seal 54 to limit the insertion of tubing 57. The radial face is closely adjacent the tubing support 12 so as to ensure engagement by the tubing end 56 and it will be understood that when the tubing 57 is inserted compression of the ring seal 54 will occur thereby increasing the sealing effectiveness between the body 10 and the nut 18 as well as increasing the return force exerted by the axial flange 52 upon the gripper 50. As seen in Figure 4A, the flange 52 has been substantially compressed upon insertion of the tubing 57.

In this embodiment of the invention again a fluid seal is provided by the ring seal 54 between the body 10 and the nut 18 with a metal-to-metal backup seal being provided at the surfaces 30, 31 and a secondary fluid seal provided by the O-ring 24. Fluid sealing occurs at the tubing end 56 in engagement with the seal 54, this type of seal, however, being more subject to end movement of the tubing 57. It should be noted that as the flange 52 of the ring seal 54 is compressed by the gripper 50 and force exerted upon the seal 54 by the end 56 of the inserted tubing 57, considerable bulging or deformation of the seal 54 occurs at the inner and outer radial margins of the ridge 51, these bulges enhancing the sealing effect between the ring seal 54, the inserted tubing 57 and the inner margin of the nut 18.

Another embodiment of the invention is depicted in Figures 5 and 5A in which again the body 10 and the nut 18 are threadedly engaged, the respective surfaces 61, 62 being configured to provide a metal-to-metal fluid seal therebetween. In this embodiment of the invention a recess 64 is again provided in the bottom of the main bore of the body 10 for receipt of the end 65 of inserted tubing 66 in a manner similar to that desribed with respect to the embodiment of Figures 1—3. A shoulder 67 at the bottom of the body bore, however, is of greater radial extent and supports a ring seal 69 of a different configuration. The gripper 70 includes a relatively long axially extending ridge 71 in abutment with an axially extending flange 72 of the ring seal 69, the ring seal 69 including an inner curved surface 74 for sealing on the inserted tubing 66 as seen in Figure 5A.

Again in this embodiment of the invention the ridge 71 of the gripper 70 compresses the projecting flange 72 of the ring seal 69, and together with the compression of the ring seal 69 by the inserted tubing 66 against the sealing surface 74, creates bulges 76 in the ring seal at either side of the ridge 71 and in engagement with the inserted tubing 66 and the inner edge 78 of the nut 18. In other respects the sealing effects of the components of this embodiment of the invention are very similar to those of the preferred embodiment of Figures 1—3 and the embodiment of Figures 4—4A.

## Claims

1. A tube connector comprising a body (10) having a bore (14) therein and a tube support (12) forming an annular space for receipt of a tube, the bore having an entrance at one end of the body and terminating at a shoulder (15).

a nut (18) having a bore (22) therein for receipt of a tube, the nut having an axially inwardly extending tubular portion terminating in an end ring of a diameter to fit within the bore in the body,
means for releasably interengaging the nut and the body and allowing their movement into a position wherein the end ring of the nut is spaced from the shoulder in the body,
an elastomeric ring seal (28) located in the body, the nut having an internal frusto-conical surface between the bore and the end ring and disposed in the annular space,
a radially expandable and contractable sleeve-like gripping member (36) having a frusto-conical outer surface in engagement with the frusto-conical internal surface of the nut and slidable relative thereto, the gripping member having gripping means (40) on the inner surface thereof for engagement with the outer surface of an inserted tube, characterised in that
the ring seal (28) has a sealing portion disposed betweeen the shoulder and the end ring and compressible therebetween to provide sealing engagement between the body and the nut, the ring seal also having an abutment portion (45) thereon radially inwardly of said sealing portion (29), the gripper member (36) having an abutment means (41) at the axially inner end thereof which abuts with the ring seal abutment portion (45) to limit inward movement of the gripper member (36) and to urge it axially outwardly toward a tube gripping position,
an O-ring seal (24) is provided in the bore (22) in the nut (18) for sealing the outer surface of an inserted tube, and
a tube engaging portion (44) is provided on the ring seal (28) and is compressible by an inserted tube (25) to increase axial sealing pressure between the nut (18) and the body (10).

2. A tube connector according to claim 1, characterised in that a non-resilient seal is formed directly between the body (10) and the nut (18).

3. A tube connector according to claim 2, characterised in that said non-resilient seal comprises a shoulder (31) on the nut (18) engageable by the body end (30) in metal-to-metal sealing engagement thereby also to limit interengagement between the body (10) and the nut (18).

4. A tube connector according to claim 3, characterised in that the non-resilient seal also comprises mating threaded portions (16, 19) on the body (10) and the nut (18).

5. A tube connector according to any one of claims 1 to 4, characterised in that the tube engaging portion of the ring seal (54) is an annular surface lying in a plane transverse to the longitudinal axis of the body (10) and the nut (18).

6. A tube connector according to any one of claims 1 to 5, characterised in that the body (10) further includes a blind bore (64) within the shoulder (67) for receiving an inserted tube (66) and the tube engaging portion (74) of the ring seal (69) is annular and positioned at the entrance of the blind bore (64) circumferentially to engage the outer surface of an inserted tube (66).

7. A tube connector according to any one of claims 1 to 6, characterised in that the abutment portion (45) of the ring seal (54) is an axially extending ridge (72), between the tube engaging portion (74) and the first sealing portion of the ring seal (69), arranged to be compressed upon insertion of the tubing (66).

## Patentansprüche

1. Rohrverbinder mit einem Körper (10), in dem eine Bohrung (14) ausgebildet ist, und mit einer Rohrstütze (12), die einen Ringraum zur Aufnahme eines Rohres bildet, wobei die Bohrung am einen Ende des Körpers einen Eintritt hat und sie an einer Schulter (15) endet,

ferner mit einer Mutter (18), in der eine Bohrung (22) zur Aufnahme eines Rohres ausgebildet, ist und die einen sich axial, einwärts erstreckenden, rohrförmigen Teil besitzt, der in einem Endring endet, der einen solchen Durchmesser hat, daß er in die Bohrung des Körpers paßt,

und mit Mitteln, die dazu dienen, die Mutter und den Körper lösbar im formschlüssigen Eingriff miteinander zu halten, und die deren Bewegung in eine Stellung ermöglichen, in der sich der Endring der Mutter im Abstand von der Schulter des Körpers befindet,

ferner mit einem in dem Körper angeordneten, elastomeren Dichtring (28), wobei die Mutter in dem Ringraum eine zwischen der Bohrung und dem Endring angeordnete, kegelstumpfförmige Innenfläche besitzt,

sowie mit einem radial aufweitbaren und einziehbaren, hülsenartigen Klemmglied (36), das eine kegelstumpfförmige Außenfläche besitzt, die an der kegelstumpfförmigen Innenfläche anliegt und relativ zu ihr gleitfähig its, wobei das Klemmglied an seiner Innenfläche mit Klemmitteln (40) zum Angriff an der Außenfläche eines eingeführten Rohres versehen ist, dadurch gekennzeichnet, daß

der Dichtring (28) einen Dichtteil besitzt, der zwischen der Schulter und dem Endring angeordnet und zwischen ihnen zusammendrückbar ist, so daß der Körper und die Mutter dichtend an dem Dichtteil angreifen, wobei der Dichtring ferner einen radial einwärts von dem Dichtteil (29) angeordneten Widerlagerteil (45) besitzt und das Klemmglied (36) an seinem axial inneren Ende ein Widerlager (41) besitzt, das an dem Widerlagerteil (45) des Dichtringes angreift und dadurch die Einwärtsbewegung des Klemmorgans (36) begrenzt und dieses axial auswärts zue einer Rohrklemmstellung hin zue bewegen trachtet,

daß in der Bohrung (22) der Mutter ein O-Dichtring (24) zum Abdichten der Außenfläche eines eingeführten Rohres vorgesehen ist und

daß an dem Dichtring (28) ein zum Angriff an einem Rohr bestimmter Teil (44) vorgesehen ist, der mit einem eingeführten Rohr (25) zusammendrückbar ist, um den axialen Dichtdruck zwischen der Mutter (18) und dem Körper (10) zu erhöhen.

2. Rohrverbinder nach Anspruch 1, dadurch gekennzeichnet, daß direkt zwischen dem Körper (10) und der Mutter (18) eine unelastische Abdichtung vorhanden ist.

3. Rohrverbinder nach Anspruch 2, dadurch gekennzeichnet, daß die unelastische Abdichtung von einer an der Mutter (18) ausgebildeten Schulter (31) gebildet wird, an der das Ende (30) des Körpers metallisch dichtend angreifen kann, um dadurch auch den Eingriff zwischen dem Körper (10) und der Mutter (18) zu begrenzen.

4. Rohrverbinder nach Anspruch 3, dadurch gekennzeichnet, daß die unelastische Abdichtung ferner von ineinandergreifenden gewindetragenden Teilen (16, 19) des Körpers (10) und der Mutter (18) gebildet wird.

5. Rohrverbinder nach einem der Ansprüche 1 bis 4, dadurch gekennzeichnet, daß der zum Angriff an einem Rohr bestimmte Teil des Dichtringes (54) eine Ringfläche ist, die in einer quer zur Längsachse des Körpers (10) und der Mutter (18) angeordneten Ebene liegt.

6. Rohrverbinder nach einem der Ansprüche 1 bis 5, dadurch gekennzeichnet, daß der Körper (10) ferner einwärts von der Schulter (67) eine Sackbohrung (64) zur Aufnahme eines eingeführten Rohres (66) besitzt und daß der zum Angriff an einem Rohr bestimmte Teil (74) des Dichtringes (69) ringförmig ist und sich zum Angriff an der Außenfläche eines eingeführten Rohres (66) am Eintritt der Sackbohrung (64) in Umfangsrichtung erstreckt.

7. Rohrverbinder nach einem der Ansprüche 1 bis 6, dadurch gekennzeichnet, daß der Widerlagerteil (45) des Dichtringes (54) eine axiale Rippe (72) ist, die sich zwischen dem zum Angriff an einem Rohr bestimmten Teil (74) und dem ersten dichtteil des Dichtringes (69) erstreckt und so angeordnet ist, daß sie beim Einführen des Rohres (66) zusammengedrückt wird.

## Revendications

1. Connecteur de tubes comprenant un corps (10) percé d'un alésage (14) et un support de tube (12) formant un espace annulaire de réception d'un tube, l'alésage présentant une entrée à une extrémité du tube, et se terminant par un épaulement (15), un écrou (18) percé d'un alésage (22) destiné à recevoir un tube, l'écrou comportant une partie tubulaire axiale dirigée vers l'intérieur et se terminant par un anneau d'extrémité de diamètre s'adaptant dans l'alésage du corps, des moyens d'engagement libérables assurant la jonction entre l'écrou et le corps tout en permettant un mouvement les amenant dans une position pour laquelle l'anneau d'extrémité de l'écrou est écarté de l'épaulement du corps, une anneau d'étanchéite en élastomère (28) placé dans le corps, l'écrou comportant une surface intérieure tronconique comprise entre l'alésage et l'anneau d'extrémité, cette surface se situant dans l'espace annulaire, un élément de blocage en forme de manchon dilatable et contractable radialement (36) présentant une surface extérieure tronconique en contact avec la surface intérieure tronconique de l'écrou et pouvant glisser par rapport à celui-ci l'élément de blocage comportant des moyens de blocage (40) sur sa surface intérieure de manière à venir en contact avec la surface extérieure d'un tube inséré, connecteur caractérisé en ce que l'anneau d'étanchéité (28) comporte une partie de joint d'étanchéité placée entre l'épaulement et l'anneau d'extrémité et pouvant se comprimer entre les deux pour former un engagement d'étanchéité entre le corps et l'écrou, l'anneau d'étanchéité, comportant également une partie de butée (45) placée radialement sur celui-ci, vers l'intérieur de la partie d'étanchéité (29), l'élément de blocage (36) comportant des moyens de butée (41) à son extrémité axiale intérieure, de manière à venir buter contre la partie de butée d'étanchéité de l'anneau (45) pour limiter le mouvement vers l'intérieur de l'élément de blocage (36) et pour le pousser axialement vers l'extérieur en direction d'une position de blocage de tube, un joint torique d'étanchéité (24) prévu dans l'alésage (22) de l'écrou (18) pour assurer l'étanchéité avec la surface extérieure d'un tube introduit, et une partie d'engagement de tube (44) prévue sur le joint d'étanchéité annulaire (28) et pouvant se comprimer, sous l'action d'un tube introduit (25), pour augmenter la pression d'étanchéité axiale entre l'écrou (18) et le corps (10).

2. Connecteur de tube selon la revendication 1, caractérisé en ce qu'un joint d'étanchéité non élastique est formé directement entre le corps (10) et l'écrou (18).

3. Connecteur de tube selon la revendication 2, caractérisé en ce que le joint d'étanchéité non élastique comporte un épaulement (31) sur l'écrou (18) pouvant venir en contact avec le corps (30) par un engagement métal contre métal, de manière à limiter ainsi l'inter-engagement entre le corps (10) et l'écrou (18).

4. Connecteur de tube selon la revendication 3, caractérisé en ce que le joint de'étanchéité non élastique comporte également des parties d'adaptation correspondantes filetées (16, 19) prévues sur le corps (10) et sur l'écrou (18).

5. Connecteur de tube selon l'une quelconque des revendications 1 à 4, caractérisé en ce que la partie d'engagement de tube de l'anneau d'étanchéité (54) est constituée par une surface annulaire située dans un plan transversal par rapport à l'axe longitudinal du corps (10) et de l'écrou (18).

6. Connecteur de tube selon l'une quelconque des revendications 1 à 5, caractérisé en ce que le corps (10) comporte, en outre, un trou borgne (64) percé dans l'épaulement (67) pour recevoir un tube inséré (66), et en ce que la partie d'engagement de tube (74) de l'anneau d'étanchéité (69) est annulaire et placée à l'entrée du trou borgne (64) de manière à recevoir circulairement la surface extérieure d'un tube inséré (66).

7. Connecteur de tube selon l'une quelconque des revendications 1 à 6, caractérisé en ce que la partie de butée (45) de l'anneau d'étanchéité (54) est constituée par une saillie axiale (72) comprise entre la partie d'engagement de tube (74) et la première partie d'étanchéité de l'annear d'étanchéité (69), et disposée de manière à être comprimée lorsqu'on introduit le tube (66).

Fig. 1

Fig. 2

Fig. 3

Fig. 4

Fig. 4A

Fig. 5

Fig. 5A